# DEMANDE DE BREVET EUROPEEN

(11) **EP 2 006 180 A1**
(43) Date de publication de la demande: **24.12.2008**
(21) Numéro de dépôt: 08300205.5
(22) Date de dépôt: 15.05.2008
(51) Int. Cl.: B60W 20/00, B60W 30/18, B60K 6/445

(54) **Système de contrôle et de commande d'une transmission pour véhicule automobile**

(30) Priorité: 20.06.2007 FR 0704392
(71) Demandeur: Renault S.A.S., 92100 Boulogne-Billancourt (FR)
(72) Inventeur: Pognant-Gros, Philippe, 92500, RUEIL-MALMAISON (FR); Reyss, Olivier, 75014, PARIS (FR); Sandou, Guillaume, 91400, GOMETZ-LA-VILLE (FR)

(57) **Abrégé**

Ce système s'applique à une propulsion assurée par un moteur thermique et par au moins un machine électrique, via une chaîne cinématique apte à entraîner au moins une roue du véhicule avec un rapport de vitesses infiniment variable, et comprend un correcteur (3) recevant en première entrée la valeur de consigne W_{ice}^{#} de vitesse du moteur thermique, ainsi que des mesures permettant de déterminer l'écart du système par rapport à cette valeur, et délivrant la valeur Tₑ du couple de la machine électrique et la transmettant en entrée d'une unité de commande (5) qui délivre en sortie la vitesse W_{ice} imprimée au moteur thermique et le couple T₀ appliqué à la roue ; il est caractérisé en ce qu'il comporte un second correcteur (4), qui reçoit en entrée ladite valeur Tₑ ainsi que la valeur de consigne To^{#} du couple du moteur thermique, et qui délivre en sortie la valeur T_{ice} du couple du moteur thermique, valeur qu'il transmet à l'unité de commande (5).

## Description

La présente invention concerne un système de contrôle et de commande d'une transmission, pour un véhicule automobile dont la propulsion est assurée par un moteur thermique et par au moins une machine électrique, via une chaîne cinématique apte à entraîner au moins une roue du véhicule avec un rapport de vitesses infiniment variable.

La machine électrique est une machine réversible, qui peut fonctionner soit en mode moteur soit en mode générateur.

Un tel système peut présenter comme particularité que la transmission du mouvement de propulsion à la roue motrice (ou aux roues motrices) se fait sans l'intermédiaire, en sortie du moteur thermique, d'un coupleur tel qu'un embrayage ou un convertisseur.

L'invention s'adresse plus particulièrement, mais non exclusivement, à un système du genre ci-dessus mentionné destiné à équiper un véhicule propulsé par un moteur thermique et par une paire de machines électriques, ces dernières étant reliées par un élément tampon permettant un stockage d'énergie électrique, cet élément tampon pouvant être notamment une batterie ou des super condensateurs.

Une architecture de ce type est décrite par exemple dans les documents de brevet WO 02 /50452, EP 1 373 001 et EP 1255 175.

Le document WO 02 /50452 concerne une architecture à deux machines électriques et un moteur thermique.

Le document EP 1373 001 se rapporte à une évolution de cette architecture vers un fonctionnement bi mode.

Enfin, le document EP 1 255 175 définit l'architecture globale du contrôle, et en particulier la couche désignée « CORG » (commande d'organes) qui détermine les signaux de commande des actionneurs pour le respect des consignes de régime du moteur thermique, du couple à la roue et de la puissance batterie.

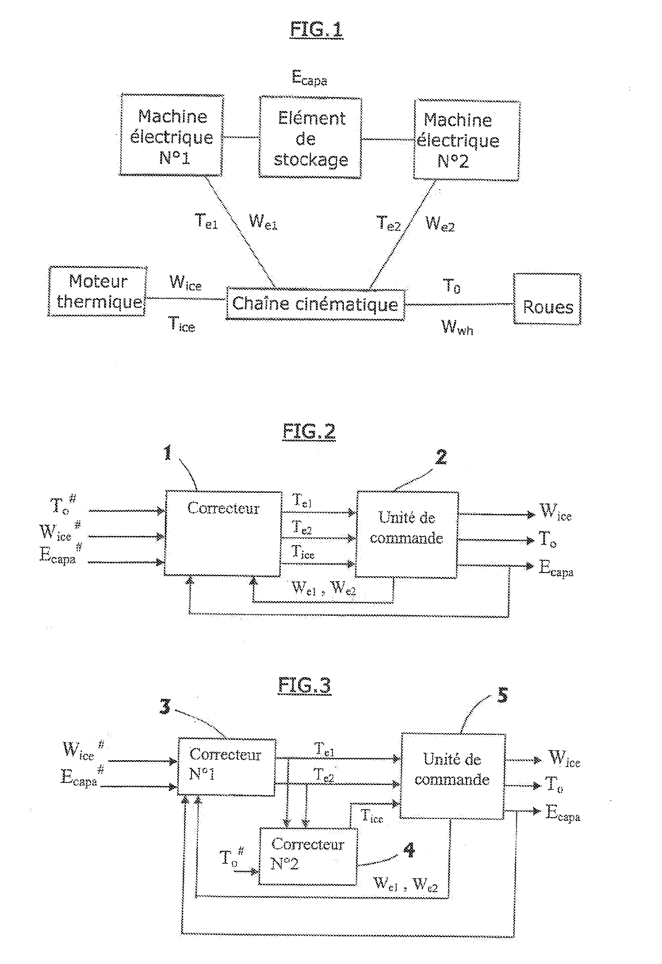

La figure 1 annexée est un schéma illustratif d'une transmission de ce type, qui est comprise dans l'état de la technique.

On y distingue la chaîne cinématique qui comprend quatre arbres d'entrée/sortie, correspondant au moteur thermique, à chaque machine électrique, et aux roues motrices.

Sur cette figure et dans la suite de la présente description :
Tₑ₁ et Tₑ₂ représentent les couples appliqués par chaque machine électrique N° 1, respectivement N° 2 ;
T_{ice} représente le couple appliqué par le moteur thermique ;
T₀ représente le couple appliqué aux roues ;
Wₑ₁ Wₑ₂ et W_{ice} représentent respectivement les vitesses de rotation des machines électriques N° 1 et N° 2, et du moteur thermique ;
W_{wh} représente la vitesse de rotation des roues ;
E_{capa} représente l'énergie contenue dans l'élément de stockage ;
Le symbole « # » affecté en exposant à une variable signifie qu'il s'agit d'une valeur de consigne de cette variable ; en l'absence de cet exposant, il s'agit d'une valeur instantanée.

Dans un ensemble de ce genre, on souhaite calculer la commande des actionneurs disponibles, à savoir les deux machines électriques et, éventuellement, le moteur thermique, permettant de réaliser le point de fonctionnement requis par les couches supérieures de supervision. Cette commande doit respecter des spécifications de performance, présenter des propriétés de robustesse, tout en assurant une régulation correcte de l'élément tampon d'énergie.

Un tel système est multivariable, ce qui signifie qu'une commande sur un actionneur induit des effets sur l'ensemble des grandeurs physiques à commander.

En d'autres termes, vouloir affecter un actionneur à une grandeur à commander est très délicat, voire impossible à réaliser, sauf à risquer de dégrader fortement la performance globale du système commandé.

D'un point de vue opposé, il peut apparaître séduisant de concevoir une loi de commande pleinement multivariable, selon laquelle la commande d'une grandeur physique se réalise par une action simultanée et coopérative de tous les actionneurs. Cependant, dans ce cas, l'architecture de contrôle qui doit y être associée est complexe et perd en partie son sens physique. En outre, une telle loi de commande est difficile, non seulement à analyser, mais aussi à mettre en oeuvre sur un calculateur, à cause des contraintes liées à la sécurité de fonctionnement.

C'est pourquoi il apparaît préférable d'implémenter sur un calculateur une loi de commande moins couplée, par laquelle le contrôle d'une grandeur physique donnée est réalisée au moyen d'un ou de deux actionneurs seulement, et non au moyen des trois actionneurs simultanément.

De plus, pour des raisons liées à la connaissance du système et au comportement dynamique des actionneurs - tels que le retard de couple du moteur thermique en fonction de sa température par exempte, les temps de réponse des actionneurs, ou la cartographie du moteur thermique - il apparaît judicieux de rassembler dans une même loi de commande les actionneurs identiques (ou à tout le moins de même nature), en l'occurrence les machines électriques.

En nous référant à nouveau à la représentation de la figure 1, il a été constaté qu'au sein d'un tel système, les variables Te₁, Te₂, T_{ice}, et T₀ sont liées par une relation quasi linéaire et pratiquement indépendante du temps. En effet, si l'on fait abstraction des raideurs de la transmission et des frottements des machines, on obtient l'équation suivante : *α Te₁* + *β Te₂* + *γ T_{ice}* + *η T₀* = *0*, dans laquelle *α*, *β*, *γ* et *η* sont des constantes physiques déterminées par la nature du système.

Du point de vue du contrôle, on considère que les couples Tₑ₁, Tₑ₂ et T_{ice} sont des grandeurs pouvant être déterminées instantanément et directement par un module correcteur dont est pourvu le système.

La figure 2 annexée est un schéma qui représente un système de commande et de contrôle à correction pleinement multivariable de type connu, comprenant un module correcteur 1 et une unité de commande 2.

Dans cette architecture, le module correcteur 1 reçoit en entrée les mesures de E_{capa}, Wₑ₁ et Wₑ₂, ainsi que les valeurs de consigne T₀^{#}, W_{ice}^{#} et E_{capa}^{#}. Il détermine l'écart du système aux valeurs de consigne, et calcule alors instantanément et directement les valeurs Tₑ₁, Tₑ₂ et T_{ice}. Les signaux correspondant sont transmis à l'entrée de l'unité de commande 2 qui pilote en conséquence la transmission, en régissant les grandeurs W_{ice}, T₀, et E_{capa} adaptées, conformément à un programme prédéfini destiné à gérer la propulsion du véhicule.

Une telle architecture est complexe car le module correcteur multivariable 1, qui traite trois grandeurs en entrée et trois grandeurs en sortie, équivaut fonctionnellement à neuf (3 x 3) correcteurs élémentaires.

L'objectif de l'invention est de simplifier l'architecture, en tirant parti de la relation algébrique mentionnée plus haut, qui lie les trois valeurs de commande Tₑ₁, Tₑ₂ et T_{ice} à la valeur à asservir T₀.

En effet, grâce à cette relation, il est possible de scinder le module correcteur en deux parties indépendantes ayant chacune des objectifs et des moyens d'action différents.

Le module correcteur unique 1 illustré sur la figure 2 détermine donc, comme expliqué plus haut, les commandes Tₑ₁, Tₑ₂ et T_{ice} à partir des erreurs de suivi des variables à asservir, à savoir W_{ice} , T₀, et E_{capa}. Une méthode de synthèse possible d'un tel correcteur est l'utilisation des méthodes de synthèse (outils mathématiques) désignées dans le domaine de P automatisme sous le vocable *H_{infini}.* De tels outils de synthèse de correcteur utilisent un cadre mathématique spécifique appelé modèle, qui définit les caractéristiques de ce dernier. A cet effet, on détermine notamment quels sont les actionneurs, les variables à réguler et les éléments susceptibles de perturber cette régulation.

C'est la prise en compte de la relation algébrique précitée qui permet de modifier l'architecture d'un tel modèle afin de scinder le correcteur en deux parties indépendantes.

L'invention a donc pour objet un système de contrôle et de commande d'une transmission, pour un véhicule automobile dont la propulsion est assurée par un moteur thermique et par au moins un machine électrique, via une chaîne cinématique apte à entraîner au moins une roue du véhicule avec un rapport de vitesses infiniment variable, qui comprend un module correcteur et une unité de commande, dans lequel :
- le module correcteur reçoit en première entrée au moins un signal correspondant à la valeur de consigne W_{ice}^{#} de la vitesse du moteur thermique, ainsi que des mesures permettant de déterminer l'écart du système par rapport à cette valeur ;
- le module correcteur délivre en sortie au moins un signal correspondant à la valeur Tₑ du couple de la machine électrique et le transmet comme signal d'entrée à l'unité de commande ;
- l'unité de commande délivre en sortie au moins un signal déterminant la vitesse W_{ice} imprimée au moteur thermique et un signal T₀ déterminant le couple appliqué à la roue.
- Conformément à l'invention, il comporte un second module correcteur, qui reçoit en entrée, d'une part le signal correspondant à la valeur Tₑ du couple de la machine électrique qui est capté à t'entrée de l'unité de commande, et, d'autre part, la valeur de consigne T₀^{#} du couple du moteur thermique, et délivre en sortie un signal correspondant à ta valeur T_{ice} du couple du moteur thermique, signal qu'il transmet en entrée de l'unité de commande.

Dans un mode de réalisation préférentiel, ce système s'adresse à un véhicule automobile dont la propulsion est assurée par un moteur thermique et par deux machines électriques qui sont reliées l'une à l'autre par un élément de stockage d'énergie.

Dans ce cas, conformément à l'invention, le premier module correcteur délivre en sortie deux signaux correspondant aux valeurs Tₑ₁ et Tₑ₂ des couples de chaque machine électrique et les transmet comme signaux d'entrée à l'unité de commande, chacun de ces signaux étant capté et transmis en entrée dudit second module correcteur.

De manière particulièrement avantageuse, dans ce même cas, le premier module correcteur reçoit également en première entrée un signal correspondant à la valeur de consigne E_{capa}^{#} de l'énergie contenue dans l'élément de stockage d'énergie, l'unité de commande délivre en sortie un signal déterminant énergie de stockage E_{capa}, et ce signal est capté en sortie de l'unité de commande et transmis en seconde entrée audit premier module correcteur.

Le second module correcteur peut être un calculateur algébrique conçu pour résoudre l'équation α Te₁ + β Te₂ +γ T_{ice} + η T₀ = 0, dans laquelle α, β, γ et η sont des constantes physiques.

Le second module correcteur comporte avantageusement des dynamiques aptes à en augmenter les performances

Avantageusement, le premier module correcteur est du type multivariable, utilisant par exemple des méthodes de synthèse H_{infini}.

Enfin, il va de soi qu'un tel système ne contrôle pas forcément une seule roue motrice du véhicule.

L'invention s'applique également à la commande et au contrôle plusieurs roues du véhicule, par exemple un train de roues gauche et droite, entraîné par la chaîne cinématique du système.

La figure 3 est un schéma analogue à celui de la figure 2, qui illustre à simple titre d'exemple non limitatif l'architecture d'un système conforme à l'invention, appliqué à une configuration à un moteur thermique et à deux machines électriques reliées par un élément tampon, du genre représenté sur la figure 1.

Sur ce schéma, l'unité de commande porte la référence 5.

On constate que le système comporte deux modules correcteurs distincts, référencés 3 et 4.

Le premier module correcteur 3 reçoit deux signaux en entrée, l'un correspondant à la valeur de consigne W_{ice}^{#} de la vitesse du moteur thermique et l'autre correspondant à la valeur de consigne E_{capa}^{#} de l'énergie contenue dans l'élément de stockage d'énergie.

De plus, il reçoit les mesures de E_{capa}, Wₑ₁ et Wₑ₂.

Le premier module correcteur 3 délivre en sortie deux signaux correspondant aux valeurs Tₑ₁ et Tₑ₂ des couples de chaque machine électrique et les transmet comme signaux d'entrée à l'unité de commande 5, chacun de ces signaux étant capté et transmis en entrée du second module correcteur 4.

Ce dernier reçoit également en entrée la valeur de consigne T₀^{#} du couple du moteur thermique, et délivre en sortie un signal correspondant à la valeur T_{ice} du couple du moteur thermique. Il le transmet en entrée de l'unité de commande 5.

L'unité de commande 5 délivre en sortie un signal T₀ définissant le couple appliqué à la roue, un signal définissant la vitesse W_{ice} imprimée au moteur thermique ainsi qu'un signal définissant l'énergie de stockage E_{capa} de l'élément tampon intercalé entre les deux machines électriques.

Ainsi, selon cette nouvelle configuration de structure, Te₁ et Te₂ régulent W_{ice} et E_{capa}, tandis que T_{ice} est déterminé dans le second module correcteur 4 à partir de la relation algébrique susmentionnée, dans l'établissement de laquelle on utilise Te₁ et Te₂ calculés par le premier module correcteur 3 ainsi que la valeur de consigne T₀^{#}.

Le premier correcteur 3 demeure de type multivariable, puisqu'il asservit W_{ice} et à E_{capa} grâce à deux actionneurs (les deux machines électriques).

Comme indiqué précédemment, un exemple d'application pour la synthèse de ce correcteur est l'utilisation des méthodes de synthèse H_{infini}.

Un avantage de cette architecture est que la structure de contrôle obtenue est moins importante en termes de temps de calcul et d'implantation au sein d'un calculateur. En effet, le second correcteur 4 doit simplement traiter une relation algébrique, tandis que le premier 3 est un correcteur multivariable assurant le suivi de deux variables.

Globalement le, système comporte donc seulement cinq correcteurs élémentaires (1 + 2 x 2) au lieu de neuf (3 x 3) dans le cas précédent illustré sur la figure 2.

Avec une telle structure on obtient un premier correcteur qui se comporte quasiment comme une boîte de vitesses classique. En fait il en a exactement l'objectif, à savoir régler le rapport de vitesses entre le moteur thermique et les roues, avec comme fonction additionnelle un rôle de gestion du flux d'énergie entrante ou sortante de l'élément de stockage.

Le second correcteur commande T₀ par T_{ice}. On obtient ainsi un comportement très proche des transmissions classiques dans lesquelles les fonctions de réglage du rapport de boîte et de régulation du couple à la roue par le couple du moteur thermique sont des fonctions indépendantes. Cette analogie permet de réutiliser des outils ou des méthodes déjà mis en oeuvre pour des transmissions classiques.

Il convient de noter que ce principe de découplage du contrôle peut être transposé à d'autres structures que celle décrite ici, y compris lorsqu'il y a une seule machine électrique ou lorsqu'il y en a plus de deux.

Pour cela il suffit qu'il y ait une relation algébrique entre le couple T₀ à la roue, le couple T_{ice} du moteur thermique et le (ou les) couple(s) Tₑ (Tₑ₁, Tₑ₂, Tₑ₃...) de la (des) machine(s) électrique(s).

## Revendications

1. Système de contrôle et de commande d'une transmission, pour un véhicule automobile dont la propulsion est assurée par un moteur thermique et par au moins un machine électrique, via une chaîne cinématique apte à entraîner au moins une roue du véhicule avec un rapport de vitesses infiniment variable, qui comprend un module correcteur (3), et une unité de commande (5), dans lequel:
- le module correcteur (3) reçoit en première entrée au moins un signal correspondant à la valeur de consigne W_{ice}^{#} de la vitesse du moteur thermique ainsi que des mesures permettant de déterminer l'écart du système par rapport à cette valeur ;
- le module correcteur (3) délivre en sortie au moins un signal correspondant à la valeur Tₑ du couple de la machine électrique et le transmet comme signal d'entrée à l'unité de commande (5);
- l'unité de commande (5) délivre en sortie au moins un signal déterminant la vitesse W_{ice} imprimée au moteur thermique et un signal T₀ déterminant le couple appliqué à la roue ;
**caractérisé par le fait qu'**il comporte un second module correcteur (4), qui reçoit en entrée, d'une part le signal correspondant à la valeur Tₑ du couple de la machine électrique qui est capté à rentrée de l'unité de commande (5), et, d'autre part, la valeur de consigne T₀^{#} du couple du moteur thermique, et délivre en sortie un signal correspondant à la valeur T_{ice} du couple du moteur thermique, signal qu'il transmet en entrée de l'unité de commande (5).

2. Système de contrôle et de commande selon la revendication 1, pour un véhicule automobile dont la propulsion est assurée par un moteur thermique et par deux machines électriques qui sont reliées l'une à l'autre par un élément de stockage d'énergie, **caractérisé par le fait que** le premier module correcteur (3) délivre en sortie deux signaux correspondant aux valeurs Tₑ₁ et Tₑ₂ des couples de chaque machine électrique et les transmet comme signaux d'entrée à l'unité de commande (5), chacun de ces signaux étant capté et transmis en entrée dudit second module correcteur (4).

3. Système de contrôle et de commande selon la revendication 2, **caractérisé par le fait que** le premier module correcteur (3) reçoit également en première entrée un signal correspondant à la valeur de consigne E_{capa}# de l'énergie contenue dans l'élément de stockage d'énergie, que l'unité de commande (5) délivre en sortie un signal déterminant cette énergie de stockage E_{capa}, et que ce signal est capté en sortie de l'unité de commande (5) et transmis en seconde entrée audit premier module correcteur (3).

4. Système de contrôle et de commande selon la revendication 2 ou 3, **caractérisé par le fait que** le second module correcteur (4) est un calculateur algébrique conçu pour résoudre l'équation α Tₑ₁ + β Te₂ + γ T_{ice} + η T₀ = 0, dans laquelle α, β, y et η sont des constantes physiques.

5. Système de contrôle et de commande selon la revendication 2 ou 3, **caractérisé par le fait que** le second module correcteur (4) comporte des dynamiques aptes à en augmenter les performances.

6. Système de contrôle et de commande selon l'une quelconque des revendications 1 à 5, **caractérisé par le fait que** le premier module correcteur (3) est du type multivariable, utilisant des méthodes de synthèse H_{infini}.

7. Système de contrôle et de commande selon l'une quelconque des revendications 1 à 6, **caractérisé par le fait que** la chaîne cinématique entraîne plusieurs roues du véhicule, par exemple un train de roues.
